# EUROPÄISCHE PATENTSCHRIFT

(11) **EP 0 841 149 B1**
(45) Veröffentlichungstag und Bekanntmachung des Hinweises auf die Patenterteilung: **04.07.2001**
(21) Anmeldenummer: 97115433.1
(22) Anmeldetag: 06.09.1997
(51) Int. Cl.: B29C 67/24, B29C 45/00, B29C 45/18, B29C 31/10

(54) **Verfahren zur Herstellung von Formteilen aus einer Polymerlegierung**
Method for manufacturing articles from a polymer blend
Procédé pour la fabrication d'objets en mélange polymère

(30) Priorität: 07.11.1996 DE 19645800; 09.08.1997 DE 19734620
(43) Veröffentlichungstag der Anmeldung: 13.05.1998
(73) Patentinhaber: Otto Bock Orthopädische Industrie Besitz- und Verwaltungs-Kommanditgesellschaft, 37115 Duderstadt (DE)
(72) Erfinder: Anhalt, Klaus-Peter, 37434 Rhumspringe (DE); Deinert, Jürgen, 37115 Duderstadt (DE)
(74) Vertreter: Gramm, Werner, Prof. Dipl.-Ing.

(56) Entgegenhaltungen:
- EP-A- 0 549 497
- WO-A-95/15819
- US-A- 4 612 155
- DATABASE WPI Section Ch, Week 9311 Derwent Publications Ltd., London, GB; Class A18, AN 93-088820 XP002067513 & JP 05 032 883 A (BANDO CHEM IND LTD)

## Beschreibung

Die Erfindung betrifft ein Verfahren zur Herstellung einer Polymerlegierung mit mehrphasiger Morphologie, welche gebildet wird, indem nicht oder wenig verträgliche thermoplastisch verarbeitbare Polymere in der Schmelze innig vermischt werden. Die Erfindung betrifft ferner die Verwendung eines nach diesem Verfahren hergestellten Formteils.

Das Modifizieren von polymeren Werkstoffen auf einer Spritzgußmaschine durch Zugabe von Additiven wie Farbstoffen oder Stabilisatoren, entweder direkt oder in Masterbatchsystemen, ist bereits bekannt.

In der US 5 130 076 wird ein Verfahren beschrieben, um in eine thermoplastische Matrix als Hauptbestandteil eines PolymerBlends geringe Mengen eines unverträglichen Thermoplasten durch Einbringen von Scherenergie derart feindispers zu verteilen, daß die Unverträglichkeit der Kunststoffe nicht zu einer Verminderung der mechanischen Eigenschaften führt. Dieses Verfahren eignet sich besonders zur Elastomermodifizierung, z. B. von Kunststoff-Recyclat höhere Konzentrationen des zweiten Blendpartners können allerdings nicht eingestellt werden, da in diesem Falle die Unverträglichkeit der Komponenten zu einem Rückgang der mechanischen Eigenschaften führen würde.

Außerdem ist bei einer hohen Konzentration des unverträglichen Blendpartners unabhängig von der eingebrachten mechanischen Scherenergie während der Formfüllphase mit einer Agglomeratbildung und somit mit einer Phasentrennung zu rechnen. Dies führt zu einem schichtförmigen Phasenaufbau. Zudem bewirkt die Phasentrennung uneinheitliches Werkstoffverhalten im Formteil. Dieses Verfahren ermöglicht daher lediglich die Herstellung von Polymerlegierungen bestehend aus einer Matrixkomponente sowie max. 25 % einer unverträglichen Modifizierungskomponente. Viele technisch interessante Legierungen sind nach diesem Verfahren daher nicht zugänglich.

In der DE 44 43 153 wird ein Verfahren zur Herstellung von Polymerblends beschrieben, bei dem die Komponenten als Pulvermischung vorgelegt werden und somit ein Teil der Mischfunktion der eigentlichen Spritzgußverarbeitung vorgeschaltet wird. Der Vorteil dieses Verfahrens liegt in der geringeren Scherbeanspruchung und somit geringeren Schädigung der Komponenten. Dieser Effekt ist besonders vorteilhaft bei der Herstellung von hellen Formteilen. Allerdings erweist sich dieses Verfahren dann als aufwendig, wenn die Komponenten nach der Polymerisation nicht als Pulver sondern als Granulat vorliegen. Solche Kunststoffe müssen zunächst vermahlen werden, wobei sich eine thermo-mechanische Schädigung einstellen kann. Zur Verminderung dieser Schädigung kann z. B. mit flüssigem Stickstoff gekühlt werden, was aber die Kosten für die Pulverherstellung erhöht.

Nachteilig erweist sich auch das schwierige Fließverhalten von Kunststoff-Pulvermischungen im Einfülltrichter der Spritzgießmaschine. Weisen z. B. die beiden Komponenten unterschiedliche Korngrößen auf, kann es zu Entmischungen kommen, die Folge hiervon sind uneinheitliche Eigenschaften in den Formteilen. Ein Rührwerk im Einfülltrichter der Spritzgießmaschine verhindert Entmischungseffekte ebenso wie Brückenbildungen. Allerdings kann es durch die durch das Rührwerk verursachte Reibung der Kunststoffkörner gegeneinander zu elektrischen Aufladungen kommen, die bei den verschiedenen Kunststoffkomponenten je nach elektrischer Leitfähigkeit unterschiedlich stark ausgeprägt ist und somit zu einem unterschiedlichen Einzugsverhalten führen kann. Zudem erhöht ein solches Rührwerk die Gesamtkosten für das Verfahren.

Aufwendig gestalten sich zudem bei Lagerung und Transport von Kunststoffpulvern Reinigungsarbeiten z. B. bei Materialwechsel.

Ein weiteres Verfahren zur Herstellung von Formteilen aus einer Polymerlegierung ist im Dokument US-A-4 612 155 offenbart.

Ziel der Erfindung ist es, mit einem Verfahren der eingangs genannten Art eine Polymerlegierung für Spritzgußformteile mit möglichst feindisperser Morphologie zu erhalten. Dadurch werden rauhe und wellige Formteiloberflächen sowie die Ausbildung von Schlieren oder Maserungen verhindert, die die mechanischen, dynamischen sowie verarbeitungsspezifischen Eigenschaften, wie z. B. die Schmelzefestigkeit verschlechtern können. In Becker, W.; Braun, D.: "Kunststoff Handbuch 3/2 Technische Polymerblends" (Carl Hanser Verlag München Wien 1993, S. 219, 220) wird der Einfluß der Morphologie und somit der Herstellungsbedingungen auf die Eigenschaften der Legierungen dargestellt.

Der Erfindung liegt daher die Aufgabe zugrunde, die oben beschriebenen im Stande der Technik bei Verfahren zur Herstellung von Polymerlegierungen in Kombination mit der Spritzgießverarbeitung noch bestehenden Nachteile auszuräumen.

Diese Aufgabe wird gemäß der Erfindung dadurch gelöst, daß die thermoplastisch verarbeitbaren Polymere in jedem gewünschten Verhältnis als Granulat im Trichter einer Spritzgießmaschine aufgegeben und anschließend in der Spritzgießmaschine plastifiziert, durchmischt und ausgeformt werden, wobei wenigstens eines der Polymere der zu bildenden Legierung funktionelle Gruppen bzw. Kettenenden aufweist, die zur Assoziation, Umlagerung oder sonstigen chemischen Reaktion mit wenigstens einem anderen Polymer der Legierung befähigt sind, so daß unter den Bedingungen des Spritzgießens wenigstens in einem bestimmten Umfang eine Assoziation und/oder zusätzliche Block-Copolymerbildung zwischen den als Legierungsbestandteilen eingesetzten Polymeren erfolgt.Hierdurch wird es möglich, für das jeweils gewünschte Formteil Polymerlegierungen mit speziell eingestellten Eigenschaften, wie z. B. bestimmter Chemikalien- bzw. Spannungsrißbeständigkeit, dynamische Strukturfestigkeit, Streckspannung, Reißdehnung, Schlagzähigkeit, Formbeständigkeit, Fließverhalten der Polymerschmelze, Verarbeitungstemperaturbereich oder Schwindung, direkt aus Polymergranulaten in praktisch beliebigen Mischungsverhältnissen herstellen zu können.
Auf diese Weise werden auch für technisch anspruchsvolle Produkte mit geringem Materialbedarf optimal angepaßte Werkstoffe verfügbar gemacht.

Es hat sich überraschenderweise herausgestellt, daß die Polymeren in jedem Verhältnis zueinander und als Granulat, d.h. sogar mit einer Korngröße größergleich 3 mm, eingesetzt werden können, wenn die Polymeren funktionelle Gruppen aufweisen, die eine Assoziation, Umlagerung oder sonstige chemische Reaktion unter den Bestandteilen der Legierung ermöglichen. Unter den Bedingungen des Spritzgießens erfolgt dann - zumindest in gewissem Umfang - eine Assoziation und/oder zusätzliche Block-Copolymerbildung zwischen den als Legierungsbestandteilen eingesetzten Polymeren, wodurch die Phasenverbundhaftung in der Polymerlegierung optimiert und die Bildung von Mischphasen unterstützt wird.

Bei einer Assoziation im Sinne dieser Erfindung kann es sich beispielsweise um eine ionische Assoziation handeln, die eine Vernetzung zwisacahen den verschiedenen Polymerkomponenten bewirkt. Ein Beispiel für eine solche Vernetzung wäre die Assoziation zwischen einem Polyamid und einem Carboxyl-Ionomer: 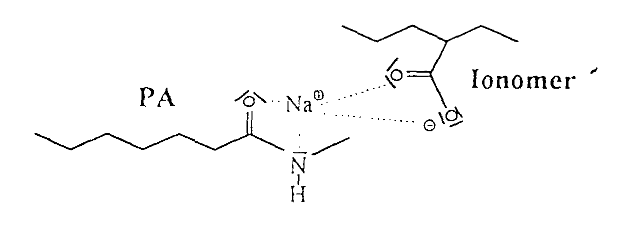 Insbesondere können die funktionellen Gruppen Ester-, Amid, Urethan- oder Anhydridfunktionen sein. Die als Granulat eingesetzten Polymere können selbst bereits Copolymere, vorzugsweise Block-Copolymere sein, bzw. eine Komponente kann ein Copolymer sein.

Zur Bereitstellung von Esterfunktionen können beispielsweise folgende esterhaltige Polymere einzeln oder in Kombination eingesetzt werden: Polyethylenterephthalat (PET), Polyethylennaphthalat (PEN), Polybutylenterephthalat (PBT), Polybutylennaphthalat (PBN), Poly-Bisphenol-A-Carbonat (PC), flüssigkristalline Polyester (LCP), Polyarylester (PAR), Polymethylmethacrylat (PMME), Polyvinylacetat (PVAC), Ethylen-Vinylacetat-Copolymer (EVA), Ethylen-Ethylacrylat-Copolymer (EEA).

Zur Bereitstellung von Amidfunktionen können beispielsweise folgende amidhaltige Polymere einzeln oder in Kombination eingesetzt werden: Polyamid 46 (PA 46), Polyamid 6 (PA 6), Polyamid 66 (PA 66), Polyamid 610 (PA 610), Polyamid 11 (PA 11), Polyamid 12 (PA 12), Polyamid 6-3-T (PA 6-3-T), Polyarylamid (PA MXD 6), Polyphthalamid (PPA), Poly-Ether-Block-Amid. Weiter kann wenigstens eines der eingesetzten Polymere Carbonylfunktionen enthalten.

Zur Bereitstellung von Anhydridfunktionen können beispielsweise folgende anhydridhaltige Polymere einzeln oder in Kombination eingesetzt werden: Styrol-Maleinsäureanhydrid-Copolymer (S/MAH) oder maleinsäureanhydridhaltiges Polypropylen (PP-MAH).

Zur Bildung der Polymerlegierung werden wenigstens zwei verschiedene Polymere eingesetzt, wobei die Polymere verschiedene funktionelle Gruppen haben können. Bei der Auswahl der einzusetzenden Polymere ist darauf zu achten, daß es unter den Bedingungen des Spritzgießens, die selbstverständlich als solche wie bekannt zu variieren sind (Massetemperatur, Durchsatzgeschwindigkeit, Schergeschwindigkeit usw.), zu Assoziation mit oder unter diesen funktionellen Gruppen, Umlagerung oder sonstigen chemischen Reaktionen, beispielsweie zusätzlicher Block-Copolymerbildung, zwischen den beteiligten Partnern kommt, wodurch dann eine verbesserte Phasenverbundhaftung erhalten wird.

Gegebenenfalls kann der Schmelze ein Phasenvermittler und/oder ein Kompatibilisator zugegeben werden, vorzugsweise geschieht dies in Mischung mit dem Polymer-Granulat, bzw. in Form eines Masterbatch. Pulverförmige Kompatibilisatoren könnten aber auch auf das Granulat wenigstens einer der eingesetzten Polymeren aufgetrommelt sein.

Je nach Wahl der Polymerkomponenten kann es erfoderlich oder vorteilhaft sein, die Reaktion zwischen diesen durch einen Katalysator zu beschleunigen. Hierdurch kann der Umsatz während des Spritzgießvorgangs ggf. in gewünschtem Maße gesteigert werden. Soll die Copolymerisation bei der Legierung durch Umesterung oder Umaminierung erfolgen, kann z. B. ein Umesterungs- bzw. Umaminierungskatalysator, z. B. ein Tetra-Alkyl-Titanat oder Antimonoxid, zugegeben werden, was vorzugsweise mit Zugabe des Granulats geschieht.

Der Umsatz - z. B. der Umesterungs- bzw. Umaminierungsreaktion - bei der Copolymerbildung ist abhängig von der Verweilzeitverteilung in der Spritzgießmaschine, der Schmelzetemperatur und der eingebrachten mechanischen Scherenergie.

Da diese Verfahrensparameter für die Optimierung des Formfüllprozesses belegt sind, kann der Umsatz der Copolymerbildung lediglich durch die Art und die Konzentration von Katalysator bzw. Desaktivator gesteuert werden. Daher ist die notwendige Katalysator- bzw. Desaktivatorkonzentration nicht nur abhängig von der Art der eingesetzten Polymeren, der Schneckendrehzahl und der Schmelzetemperatur, sondern auch von der eingesetzten Spritzgießmaschine (Verweilzeit) und vom Formteil (Schußgewicht).

Die mehrphasige Morphologie innerhalb der Polymerlegierung wird nur erhalten, wenn die Co-Polymerisierung, bzw. die assoziative Kompatibilisierung, nicht zu weit forschreitet. Insbesondere bei langen Verweilzeiten oder hohen Temperaturen kann es daher vorteilhaft sein, der Polymermischung einen Desaktivator zuzugeben. Desaktivatoren oder Inhibitoren bewirken zudem die zur Mehrfachverarbeitung (Recycling) notwendige Phasenstabilität. Sie können, sofern sie flüssig vorliegen, beispielsweise vor einen Statikmischer oder vor eine beliebige Mischdüse in das Verfahrensteil gespritzt werden.

Als Desaktivatoren kommen beispielsweise Diisodecylphenylphosphit, 2-Hydroxy-benzophenonderivat oder Diacylhydrazin in Frage.

In Weiterbildung der Erfindung können mit dem Granulat weitere Stoffe als Zusatzstoffe zugegeben werden, z. B. Trennmittel, Calciumcarbonat, Talkum oder Glimmer, oder z. B. Armierungsmittel wie z. B. Glas- Kohlenstoff- oder Aramidfasern. Die Vermittler, Kompatibilisatoren, Katalysatoren, Desaktovatoren und/oder sonstigen Zusatzstoffe können, soweit vorhanden, in einem Masterbatch vorgelegt werden.

Es besteht auch prinzipiell die Möglichkeit, extern gebildete Block-Copolymere mit den Legierungsbestandteilen im Trichter der Spritzgießmaschine vorzulegen und somit die Copolymerbildung einerseits und das Legieren und Spritzgießen andererseits verfahrenstechnisch zu trennen. Vorteilhaft hierbei ist die einfachere Prozeßführung, nachteilig hingegen ist der zusätzliche Verfahrensschritt zu werten.

Der Vergleich zwischen konventionell und nach dem erfindungsgemäßen Verfahren hergestellten Formteilen aus Polymerlegierungen ergab keinen Unterschied hinsichtlich Streckspannung, Reißdehnung, Elastizitäts-Modul, Dauerschwingfestigkeit, Löslichkeit und Spannungsrißbeständigkeit.

Das Vermengen der erfindungsgemäß eingesetzten Polymeren als Granulat z. B. im Trichter der Spritzgießmaschine hat sich demnach als ausreichend erwiesen, um Morphologien zu realisieren, die ein optimales chemisches und mechanisches Eigenschaftsniveau gewährleisten. Auch für ein homogenes Werkstoffverhalten ist das Vermengen von Granulat ausreichend. Daher kann auf das Vorvermischen der Polymeren z. B. als Pulvermischung verzichtet werden. Insbesondere ist es nicht erforderlich, im Handel als Granulate erhältliche Polymere vor dem Legieren zu vermahlen, was zusätzlichen Aufwand und Kosten spart. Auch werden die Polymerlegierungen nach dem erfindungsgemäßen Verfahren trotz der gesteigerten Massentemperatur sehr materialschonend verarbeitet, da durch den Verzicht auf den vorgeschalteten separaten Legierungsschritt für das Gesamtverfahren ein schädigender Verarbeitungsprozeß entfällt. Durch den Wegfall des separaten Legierungsprozesses ist das Verfahren sehr kostengünstig.

Aufgrund der optimierten Phasenverbundhaftung können die Legierungsbestandteile zudem in jedem beliebigen Verhältnis zueinander eingesetzt werden. Außerdem kann wegen der hohen Verbundhaftung zwischen den Phasen der nach dem erfindungsgemäßen Verfahren hergestellten Polymerlegierungen der erforderliche Energieeintrag derart herabgesetzt werden, daß konventionelle Spritzgußschnecken eingesetzt werden können. Dieser Effekt erspart den Wechsel der Schnecke bei einer Produktumstellung und verringert somit weiter die Kosten des Verfahrens.

Bei der konventionellen Spritzgußschnecke kann es sich um eine Universalschnecke handeln, die vorzugsweise eine Länge zwischen 16 und 20 D (16- und 20mal dem Durchmesser) aufweist, wobei ca. 50% der Länge dem Einzugsbereich, 30% der Länge der Kompressionszone und 20% der Ausstoßzone zuzuordnen sind. Zusätzliche Scher- oder Mischelemente sind nicht erforderlich. Die Kompression sollte im Bereich zwischen 1,5 bis 3 liegen.

Des weiteren können Kosten eingespart werden, wenn die Komponenten nicht als Granulatmischung vorgelegt werden, sondern ein geteilter Trichter verwendet wird.

Nach dem erfindungsgemäßen Verfahren wird die produktspezifische Einstellung von Art und Konzentration der Legierungsbestandteile für jedes einzelne Spritzgußteil möglich, was die Fertigung von Einzelteilen mit speziellem Eigenschafts-Design ermöglicht. Gerade hierdurch bietet sich besonders die Verwendung der nach dem erfindungsgemäßen Verfahren hergestellten Formteile für Prothesen in der Orthopädie an.

Im folgenden werden Beispiele für Polymermischungen angegeben, aus denen gemäß dem erfindungsgemäßen Verfahren Formteile hergestellt werden können.

| LEGIERUNGSMISCHUNG I | | |
|---|---|---|
| | Rezeptur | |
| Polymer 1 | PA | 70 Gew.-% |
| Polymer 2 | PP-MAH | 28,5 Gew.-% |
| Katalysator Desaktivator Masterbatch | PA, 50% Metallodidpigmente | 1,5 Gew.-% |
| Massetemperatur | | 240-260°C |
| Mittlere Verweilzeit | | 4-8 min |
| Spritzteil | Schaftansatz | |
| Schußgewicht | | 220g |
| Polymer 1: PA | | |
| Polymer 2: PP-MAH | | |

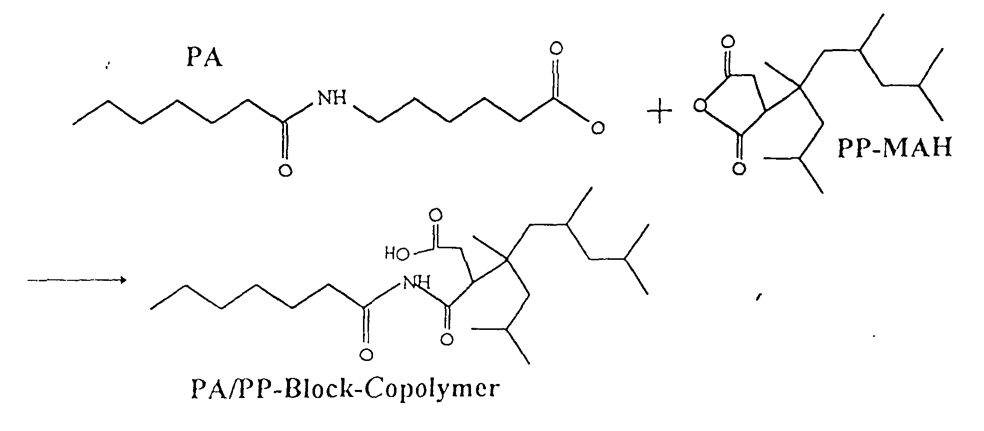

| LEGIERUNGSMISCHUNG II | | |
|---|---|---|
| | Rezeptur | |
| Polymer 1 | PC | 49,5 Gew.-% |
| Polymer 2 | PBT | 49,5 Gew.-% |
| Katalysator | Tetra-Alkyl-Titanat | 0,4 Gew.-% |
| Desaktivator | Trilaurylphosphit | 0,6 Gew.-% |
| Massetemperatur | | 250 - 270°C |
| Mittlere Verweilzeit | | 2,5 - 5 min |
| Spritzteil | Zugstab | |
| Schußgewicht | | 11g |
| Polymer 1: PBT | | |
| Polymer 2: PC | | |

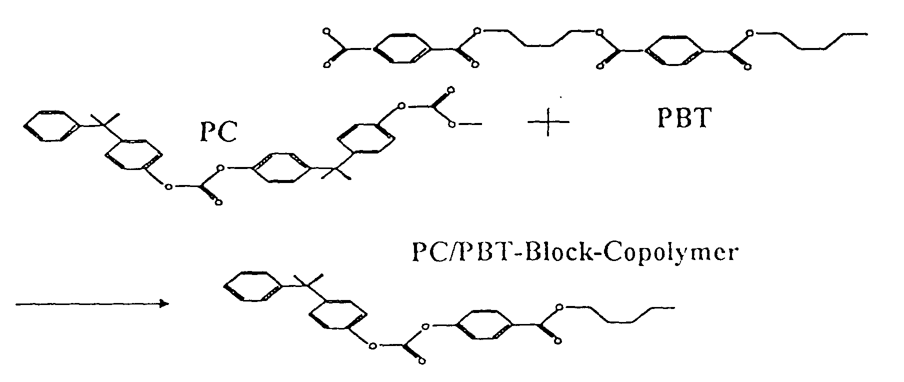

| LEGIERUNGSMISCHUNG III: | | |
|---|---|---|
| | Rezeptur | |
| Polymer 1 | PET | 75 Gew.-% |
| Polymer 2 | PU | 23 Gew.-% |
| Katalysator | Antimonoxid | 0,8 Gew.-% |
| Desaktivator | Oxalsäuredihydrazid | 1,2 Gew.-% |
| Massetemperatur | | 280 - 290°C |
| Mittlere Verweilzeit | | 3 - 7 min |
| Spritzteil | Kniepaßteil | |
| Schußgewicht | | 165g |
| Polymer 1: PET | | |
| Polymer 2: EVA | | |

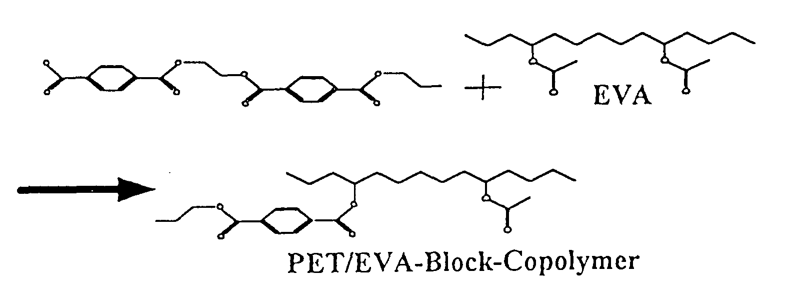

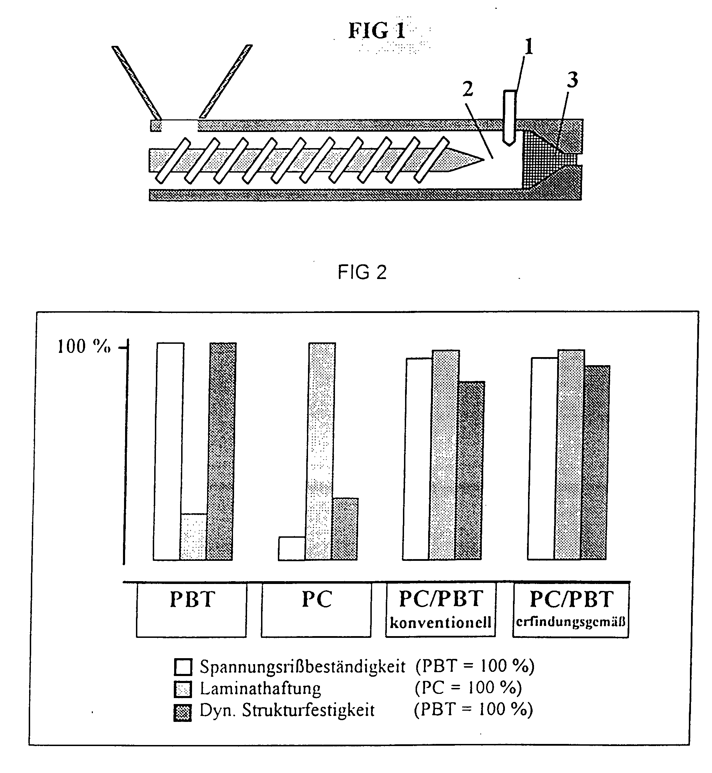

Fig. 1 zeigt in schematischer Darstellung einen Längsschnitt durch den Plastifizierzylinder einer Spritzgießmaschine. Dargestellt ist die Position der Einspritzdüse 1 für einen flüssigen Inhibitor zwischen Stauraum 2 und Mischdüse 3.

Fig. 2 zeigt den Vergleich von Spannungsrißbeständigkeit, Haftung zu Acrylatharzsystemen (Verklebbarkeit, Lackierbarkeit) und von dynamischer Strukturfestigkeit (ISO A 100) zwischen den Ausgangspolymeren PC und PBT der Legierungsmischung II und der durch das erfindungsgemäße sowie durch das konventionelle Verfahren hergestellten Legierungen PBT/PC.

## Patentansprüche

1. Verfahren zur Herstellung von Formteilen aus einer Polymerlegierung mit mehrphasiger Morphologie, welche gebildet wird, indem nicht oder wenig verträgliche, thermoplastisch verarbeitbare Polymere in der Schmelze innig vermischt werden,
wobei wenigstens eines der Polymere der zu bildenden Legierung funktionelle Gruppen bzw. Kettenenden aufweist, die zur Assoziation, Umlagerung oder sonstigen chemischen Reaktion mit wenigstens einem anderen Polymer der Legierung befähigt sind,
**dadurch gekennzeichnet**,
daß die thermoplastisch verarbeitbaren Polymere in jedem gewünschten Verhältnis als Granulat im Trichter einer Spritzgießmaschine aufgegeben und anschließend in der Spritzgießmaschine plastifiziert, durchmischt und ausgeformt werden,
so daß unter den Bedingungen des Spritzgießens wenigstens in einem bestimmten Umfang eine Assoziation und/oder zusätzliche Block-Copolymerbildung zwischen den als Legierungsbestandteilen eingesetzten Polymeren erfolgt.

2. Verfahren nach Anspruch 1, dadurch gekennzeichnet, daß unter den eingesetzten Polymeren wenigstens ein Copolymer, vorzugsweise ein Block-Copolymer ist.

3. Verfahren nach Anspruch 1 oder 2, dadurch gekennzeichnet, daß wenigstens eines der eingesetzten Polymere Esterfunktionen als funktionelle Gruppen enthält.

4. Verfahren nach Anspruch 3, dadurch gekennzeichnet, daß als esterhaltiges Polymer Polyethylenterephthalat (PET), Polyethylennaphthalat (PEN), Polybutylenterephthalat (PBT), Polybutylennaphthalat (PBN), Poly-Bisphenol-A-Carbonat (PC), flüssigkristalline Polyester (LCP), Polyarylester (PAR), Polymethylmethacrylat (PMMA), Polyvinylacetat (PVAC), Ethylen-Vinylacetat-Copolymer (EVA) und/oder Ethylen-Ethylacrylat-Copolymer (EEA) eingesetzt wird.

5. Verfahren nach einem der Ansprüche 1 bis 4, dadurch gekennzeichnet, daß wenigstens eines der eingesetzten Polymere Amidfunktionen als funktionelle Gruppen enthält.

6. Verfahren nach Anspruch 5, dadurch gekennzeichnet, daß als amidhaltiges Polymer Polyamid 46 (PA 46), Polyamid 6 (PA 6), Polyamid 66 (PA 66), Polyamid 610 (PA 610), Polyamid 11 (PA 11), Polyamid 12 (PA 12), Polyamid 6-3-T (PA 6-3-T), Polyarylamid (PA MXD 6), Polyphthalamid (PPA) oder Poly-Ether-Block-Amid eingesetzt wird.

7. Verfahren nach einem der Ansprüche 1 bis 6, dadurch gekennzeichnet, daß wenigstens eines der eingesetzten Polymere Urethanfunktionen als funktionellen Gruppen enthält.

8. Verfahren nach einem der Ansprüche 1 bis 7, dadurch gekennzeichnet, daß wenigstens eines der eingesetzten Polymere Anhydridfunktionen oder Carboxylfunktionen als funktionellen Gruppen enthält.

9. Verfahren nach Anspruch 8, dadurch gekennzeichnet, daß als Polymer Styrol-Maleinsäureanhydrid-Copolymer (S/MAH), maleinsäureanhydridhaltiges Polypropylen (PP-MAH) oder ein Ionomer eingesetzt wird.

10. Verfahren nach einem der Ansprüche 1 bis 9, dadurch gekennzeichnet, daß wenigstens drei verschiedene Polymere als Legierungsbestandteile eingesetzt werden, wobei eines der Polymere vorzugsweise ein Elastomer, wie z.B. Polybutadien, Ethylen-Propylen-Dien-Kautschuk, Polysiloxan, Styrol-Butadien-Copolymer, Styrol-Butadien-Styrol-Dreiblockpolymer, Acrylatkautschuk, ABS-Pfropfcopolymerisat oder Methylmethacrylat-Butadien-Pfropfkautschuk, ist.

11. Verfahren nach einem der Ansprüche 1 bis 10, dadurch gekennzeichnet, daß mit dem Granulat zusätzlich ein Phasenvermittler und/oder Kompatibilisator zugegeben wird.

12. Verfahren nach einem der Ansprüche 1 bis 11, dadurch gekennzeichnet, daß zusätzlich ein Katalysator, beispielsweise ein Umesterungs- oder Umaminierungskatalysator, z.B. ein Tetra-Alkyl-Titanat oder ein Antimonoxid, zugegeben wird, vorzugsweise mit dem Granulat.

13. Verfahren nach einem der Ansprüche 1 bis 12, dadurch gekennzeichnet, daß zusätzlich ein Desaktivator in die Polymerschmelze gespritzt wird, vorzugsweise vor eine Mischdüse.

14. Verfahren nach Anspruch 13, dadurch gekennzeichnet, daß als Desaktivator Diisodecylphenylphosphit, 2-Hydroxybenzophenonderivat oder Diacylhydrazin eingesetzt wird.

15. Verfahren nach einem der Ansprüche 1 bis 14, dadurch gekennzeichnet, daß mit dem Granulat weitere Stoffe als Zusatzstoffe zugegeben werden, z.B. Trennmittel Calciumcarbonat, Talkum oder Glimmer, oder z.B. Armierungsmittel, wie z.B. Glas- Kohlenstoff- oder Aramidfasern.

16. Verfahren nach einem der Ansprüche 11 bis 15,dadurch gekennzeichnet, daß, soweit vorhanden, die Vermittler, Kompatibilisatoren, Katalysatoren, Desaktivatoren und/oder sonstige Zusatzstoffe, in einem Masterbatch vorgelegt werden.

17. Verfahren nach einem der vorhergehenden Ansprüche, dadurch gekennzeichnet, daß zur Herstellung der Polymerlegierung eine Universalschnecke eingesetzt wird, die eine Länge zwischen 16 - 20D aufweist, wobei ca. 50% der Länge dem Einzugbereich, 30% der Länge der Kompressionszone und 20% der Ausstoßzone zugeordnet werden kann und deren Kompression im Bereich zwischen 1,5 bis 3 liegt sowie keine zusätzlichen Scher- oder Mischelemente enthält.

18. Verwendung eines Formteils, hergestellt nach einem Verfahren gemäß einem der Ansprüche 1 bis 17, in der Orthopädie.

## Claims

1. Process for the production of mouldings from a polymer alloy having a multiphase morphology, which alloy is formed by intimately mixing incompatible or sparingly compatible, melt-processable polymers as a melt, wherein at least one of the polymers of the alloy to be formed comprises functional groups or chain ends which are capable of association, rearrangement or other chemical reaction with at least one other polymer of the alloy,
characterised in that
the melt-processable polymers are introduced as pellets in any desired ratio into the hopper of an injection moulding machine and are then plasticised, thoroughly mixed and shaped in the injection moulding machine,
such that, under the conditions of injection moulding, an association and/or additional formation of block copolymer proceeds to at least a certain extent between the polymers used as alloy constituents.

2. Process according to claim 1, characterised in that the polymers used comprise at least one copolymer, preferably a block copolymer.

3. Process according to claim 1 or 2, characterised in that at least one of the polymers used contains ester functions as functional groups.

4. Process according to claim 3, characterised in that polyethylene terephthalate (PET), polyethylene naphthalate (PEN), polybutylene terephthalate (PBT), polybutylene naphthalate (PBN), poly-bisphenol A carbonate (PC), liquid crystalline polyester (LCP), polyaryl ester (PAR), polymethyl methacrylate (PMMA), polyvinyl acetate (PVAC), ethylene/vinyl acetate copolymer (EVA) and/or ethylene/ethyl acrylate copolymer (EEA) is used as the ester-containing polymer.

5. Process according to one of claims 1 to 4, characterised in that at least one of the polymers used contains amide functions as functional groups.

6. Process according to claim 5, characterised in that polyamide 46 (PA 46), polyamide 6 (PA 6), polyamide 66 (PA 66), polyamide 610 (PA 610), polyamide 11 (PA 11), polyamide 12 (PA 12), polyamide 6-3-T (PA 6-3-T), polyarylamide (PA MXD 6), polyphthalamide (PPA) or polyether/block amide is used as the amide-containing polymer.

7. Process according to one of claims 1 to 6, characterised in that at least one of the polymers used contains urethane functions as functional groups.

8. Process according to one of claims 1 to 7, characterised in that at least one of the polymers used contains anhydride functions or carboxyl functions as functional groups.

9. Process according to claim 8, characterised in that styrene/maleic anhydride copolymer (S/MAH), polypropylene containing maleic anhydride (PP-MAH) or an ionomer is used as a polymer.

10. Process according to one of claims 1 to 9, characterised in that at least three different polymers are used as alloy constituents, wherein one of the polymers is preferably an elastomer, such as for example polybutadiene, ethylene/propylene/diene rubber, polysiloxane, styrene/butadiene copolymer, styrene/butadiene/styrene triblock polymer, acrylate rubber, ABS graft copolymer or methyl methacrylate/butadiene graft rubber.

11. Process according to one of claims 1 to 10, characterised in that a phase-transfer agent and/or compatibiliser is additionally added with the pellets.

12. Process according to one of claims 1 to 11, characterised in that a catalyst, for example a transesterification or transamination catalyst, for example a tetraalkyl titanate or an antimony oxide, is additionally added, preferably with the pellets.

13. Process according to one of claims 1 to 12, characterised in that a deactivator is additionally injected into the polymer melt, preferably upstream from a mixing nozzle.

14. Process according to claim 13, characterised in that diisodecylphenyl phosphite, 2-hydroxybenzophenone derivative or diacylhydrazine is used as the deactivator.

15. Process according to one of claims 1 to 14, characterised in that further substances are added with the pellets as additives, for example release agent calcium carbonate, talcum or mica, or for example reinforcing materials, such as for example glass, carbon or aramide fibres.

16. Process according to one of claims 11 to 15, characterised in that, when present, the phase-transfer agents, compatibilisers, catalysts, deactivators and/or other additives are initially introduced in a masterbatch.

17. Process according to one of the preceding claims, characterised in that the polymer alloy is produced using a multipurpose screw which has a length of between 16 and 20 D, wherein approx. 50% of the length may be assigned to the feed section, 30% of the length to the compression zone and 20% to the metering zone and the compression thereof is in the range between 1.5 and 3 and also contains no additional shear or mixing elements.

18. Use of a moulding produced using a process according to one of claims 1 to 17 in orthopaedics.

## Revendications

1. Procédé pour la fabrication de pièces de forme en alliage de polymères avec une morphologie polyphasée, que l'on forme en mélangeant intimement dans le bain, des polymères thermoplastiquement ouvrables peu ou pas compatibles, au moins un des polymères de l'alliage à constituer présentant des groupes fonctionnels, respectivement des extrémités de chaînes, qui sont adaptés à s'allier par association, transformation ou par une autre réaction chimique avec au moins un autre polymère de l'alliage,
caractérisé en ce que les polymères thermoplastiquement ouvrables sont alimentés sous forme de granulés dans n'importe quelle proportion souhaitée dans l'entonnoir d'une machine de moulage par injection, puis sont plastifiés, mélangés intimement et moulés dans la machine de moulage par injection, de sorte qu'il se produit dans les conditions du moulage par injection, au moins dans une certaine mesure, une association et/ou une copolymérisation par blocs additionelle entre les polymères utilisés comme composants de l'alliage.

2. Procédé selon la revendication 1, caractérisé en ce que les polymères utilisés comprennent au moins un copolymère, de préférence un copolymère bloc.

3. Procédé selon la revendication 1 ou 2, caractérisé en ce qu'au moins un des polymères utilisés contient des fonctions ester comme groupes fonctionnels.

4. Procédé selon la revendication 3, caractérisé en ce que comme polymère contenant un ester, on utilise un polyéthylènetéréphtalate (PET), un polyéthylènenaphtalate (PEN), un polybutylènetéréphtalate (PBT), un polybutylènenaphtalate (PBN), un poly-bisphénol-A-carbonate (PC), un polyester cristal liquide (LCP), un polyarylester (PAR), un polyméthylméthacrylate (PMMA), un polyvinylacétate (PVAC), un copolymère éthylène-vinylacétate (EVA) et/ou un copolymère éthylène-éthylacrylate (EEA).

5. Procédé selon l'une des revendications 1 à 4, caractérisé en ce qu'au moins un des polymères utilisés contient des fonctions amide comme groupes fonctionnels.

6. Procédé selon la revendication 5, caractérisé en ce que comme polymère contenant une amide, on utilise un polyamide 46 (PA 46), un polyamide 6 (PA 6), un polyamide 66 (PA 66), un polyamide 610 (PA 610), un polyamide 11 (PA 11), un polyamide 12 (PA 12), un polyamide 6-3-T (PA 6-3-T), un polyarylamide (PA MXD 6), un polyphtalamide (PPA) ou un poly-éther-bloc-amide.

7. Procédé selon l'une des revendications 1 à 6, caractérisé en ce qu'au moins un des polymères utilisés contient des fonctions uréthane comme groupes fonctionnels.

8. Procédé selon l'une des revendications 1 à 7, caractérisé en ce qu'au moins un des polymères utilisés contient des fonctions anhydride ou carboxyle comme groupes fonctionnels.

9. Procédé selon la revendication 8, caractérisé en ce que comme polymère on utilise un copolymère styrol-anhydride de l'acide maléique (S/MAH), un polypropylène contenant un anhydride de l'acide maléique (PP-MAH) ou un ionomère.

10. Procédé selon l'une des revendications 1 à 9, caractérisé en ce qu'on utilise au moins trois polymères différents comme composants de l'alliage, un des polymères étant de préférence un élastomère, comme par exemple un polybutadiène, un caoutchouc éthylène-propylène-diène, un polysiloxane, un copolymère styrol-butadiène, un polymère trois blocs styrol-butadiène-styrol, un caoutchouc acrylate, un polymère greffé ABS ou un caoutchouc greffé méthylméthacrylate-butadiène.

11. Procédé selon l'une des revendications 1 à 10, caractérisé en ce qu'on charge entre outre avec les granulés un médiateur de phases et/ou un agent de compatibilité additionnel.

12. Procédé selon l'une des revendications 1 à 11, caractérisé en qu'on introduit, de préférence avec les granulés, un catalyseur, par exemple un catalyseur de transestérification ou de transamination, par exemple un titanate de tétra-alkyle ou un oxyde d'antimoine.

13. Procédé selon l'une des revendications 1 à 12, caractérisé en ce qu'on injecte un désactivateur dans le bain de polymères, de préférence en amont d'une buse mélangeuse.

14. Procédé selon la revendication 13, caractérisé en ce que l'on utilise comme désactivateur un diisodécylphénylphosphite, un dérivé de 2-hydroxy-benzophénone ou une discylhydrazine.

15. Procédé selon l'une des revendications 1 à 14, caractérisé en ce qu'avec les granulés on introduit en outre d'autres substances comme additifs, par exemple comme agent de démoulage un carbonate de calcium, du talc ou du mica, ou par exemple un moyen d'armature, comme par exemple des fibres aramides, de verre ou de carbone.

16. Procédé selon l'une des revendications 11 à 15, caractérisé en ce que, dans la mesure de leur présence, les médiateurs, les agents de compatibilité, catalyseurs, désactiveurs et/ou autres additifs sont introduits dans un mélange-maître.

17. Procédé selon l'une des revendications précédentes, caractérisé en ce que pour la fabrication de l'alliage de polymères on utilise une vis sans fin universelle, qui présente une longueur entre 16 et 20D, environ 50% de la longueur pouvant être affectée à la zone d'entrée, 30% de la longueur à la zone de compression et 20% à la zone d'éjection, et dont la compression est située dans l'intervalle de 1,5 à 3, et qui ne contient pas d'éléments additionnels de cisaillement ou mélangeurs.

18. Application à l'orthopédie d'une pièce de forme produite selon un procédé suivant l'une des revendications 1 à 17.
